# EUROPEAN PATENT APPLICATION

(11) **EP 4 037 265 A1**
(43) Date of publication of application: **03.08.2022**
(21) Application number: 20880577.0
(22) Date of filing: 01.08.2020
(51) Int. Cl.: H04L 12/721

(54) **PACKET FORWARDING METHOD, APPARATUS, STORAGE MEDIUM, AND SYSTEM**

(30) Priority: 30.10.2019 CN 201911046488; 12.12.2019 CN 201911271029
(71) Applicant: Huawei Technologies Co., Ltd., Longgang District, Shenzhen, Guangdong 518129 (CN)
(72) Inventor: WU, Hong, Shenzhen, Guangdong 518129 (CN); CAO, Ruiqing, Shenzhen, Guangdong 518129 (CN); ZHU, Jianbo, Shenzhen, Guangdong 518129 (CN); MENG, Kun, Shenzhen, Guangdong 518129 (CN); WANG, Haibo, Shenzhen, Guangdong 518129 (CN); HONG, Wenxiang, Shenzhen, Guangdong 518129 (CN); LIU, Yi, Shenzhen, Guangdong 518129 (CN); ZHANG, Huangbin, Shenzhen, Guangdong 518129 (CN); LIU, Changkui, Shenzhen, Guangdong 518129 (CN); LU, Chunhui, Shenzhen, Guangdong 518129 (CN)
(74) Representative: Maiwald Patent- und Rechtsanwaltsgesellschaft mbH
(86) International application number: PCT/CN2020/106479
(87) International publication number: WO 2021/082575

(57) **Abstract**

This application provides a packet forwarding method, a device, a storage medium, and a system. A match condition and a path parameter are carried in a control message, and the path parameter includes an address identifier and a path feature identifier, so that when there are a plurality of forwarding paths between two devices in a network and when a first device receives a packet that meets the match condition in the control message, the packet may be forwarded on a forwarding path corresponding to the path parameter. The method provided in this application helps reduce network configuration complexity.

## Description

This application claims priorities to Chinese Patent Application No. 201911046488.0, filed with the China National Intellectual Property Administration on October 30, 2019 and entitled "DATA PACKET FORWARDING METHOD, APPARATUS, AND SYSTEM", and to Chinese Patent Application No. 201911271029.2, filed with the China National Intellectual Property Administration on December 12, 2019 and entitled "PACKET FORWARDING METHOD, DEVICE, STORAGE MEDIUM, AND SYSTEM", which are incorporated herein by reference in their entireties.

### TECHNICAL FIELD

This application relates to the communication field, and to a packet forwarding method, a device, a storage medium, and a system.

### BACKGROUND

Nowadays, network applications are developing toward refined management. For example, users expect that some services can be forwarded on a specified transmission path. For example, the users expect that all voice-related services can be forwarded on a specified forwarding path with a low delay. When there are a plurality of forwarding paths between two devices on a transmission network, a network device usually selects a forwarding path with lowest forwarding costs (cost) for forwarding. In some cases, when the forwarding path with the lowest costs is congested or has a high delay, and therefore cannot meet a service requirement, to enable different service data packets to be forwarded on different specified forwarding paths, complex configuration needs to be performed, and even each device on these forwarding paths needs to be configured. In this case, user operations are complex.

### SUMMARY

This application provides a packet forwarding method and apparatus, to enable different service data packets to be forwarded on different specified forwarding paths, thereby reducing configuration complexity and simplifying operations.

According to a first aspect, a packet forwarding method is provided, and includes: A first device obtains a control message in a scenario in which there are a plurality of forwarding paths between the first device and a second device, where the control message includes a match condition and a path parameter, the path parameter includes an address identifier and a path feature identifier, the address identifier is an identifier of the second device, and the path parameter indicates one forwarding path in the plurality of forwarding paths; the first device receives a first packet; the first device determines that a forwarding path of the first packet passes through the second device; and the first device sends the first packet to the second device along the forwarding path when the first device determines that a feature of the first packet meets the match condition.

In the method, when there are a plurality of forwarding paths between two devices in a network, a data packet may be forwarded on a determined forwarding path, but not on a default forwarding path with lowest costs. A forwarding path can be specified without complex configuration by including both the match condition and the path parameter in the control message. When there are a plurality of devices between the two devices, the plurality of devices do not need to be configured one by one, and therefore configuration complexity is reduced.

In a possible manner, the path feature identifier includes a performance identifier, where the performance identifier indicates that the forwarding path meets a performance requirement corresponding to the performance identifier.

In the method in which the performance identifier is used, a performance requirement that needs to be met by a forwarding path of a data service may be further specified, and therefore complexity of a plurality of times of configuration is reduced.

In a possible manner, the path feature identifier includes a path identifier, and the path identifier includes a binding segment identifier or a multi-protocol label switching tunnel identifier.

In the method in which the path identifier is used, the forwarding path of the data service may be clearly specified, which requires simple configuration.

In a possible manner, the control message is border gateway protocol flow specification information.

The control message uses border gateway protocol flow specification rules, and a mature application technology may be used, so that utilization of the solution of the present invention is higher.

In a possible manner, the match condition includes one or more of the following: a destination address prefix, a source address prefix, an Internet Protocol (IP) number, a port number, a destination port number, a source port number, an international packet control protocol type, an international packet control protocol code, a transmission control protocol flag, an IP packet length, a differentiated services code point, and a slice identifier.

A plurality of match items may be used, so that a plurality of match manners can be met to meet match requirements of different services.

In a possible manner, the path feature identifier is carried in a color extended community attribute of the control message.

In a possible manner, the address identifier is carried in a redirection extended community attribute of the control message.

According to a second aspect, a packet forwarding method is provided, and includes: A management device sends a control message to a first device in a scenario in which there are a plurality of forwarding paths between the first device and a second device, where the control message includes a match condition and a path parameter, the path parameter includes an address identifier and a path feature identifier, the address identifier is an identifier of the second device, and the path parameter indicates one forwarding path in the plurality of forwarding paths; and when the control message indicates that the first device has received a packet whose forwarding path passes through the second device, and the packet meets the match condition, the management device sends a first packet to the second device along the forwarding path.

In the method, when there are a plurality of forwarding paths between two devices in a network, a data packet may be forwarded on a determined forwarding path, but not on a default forwarding path with lowest costs. A forwarding path can be specified without complex configuration by including both the match condition and the path parameter in the control message. When there are a plurality of devices between the two devices, the plurality of devices do not need to be configured one by one, and therefore configuration complexity is reduced.

In a possible manner, the path feature identifier includes a performance identifier, where the performance identifier indicates that the forwarding path meets a performance requirement corresponding to the performance identifier.

In the method in which the performance identifier is used, a performance requirement that needs to be met by a forwarding path of a data service may be further specified, and therefore complexity of a plurality of times of configuration is reduced.

In a possible manner, the path feature identifier includes a path identifier, and the path identifier includes a binding segment identifier or a multi-protocol label switching tunnel identifier.

In the method in which the path identifier is used, the forwarding path of the data service may be clearly specified, which requires simple configuration.

In a possible manner, the control message is border gateway protocol flow specification information.

The control message uses border gateway protocol flow specification rules, and a mature application technology may be used, so that utilization of the solution of the present invention is higher.

In a possible manner, the match condition includes one or more of the following: a destination address prefix, a source address prefix, an Internet Protocol (IP) number, a port number, a destination port number, a source port number, an international packet control protocol type, an international packet control protocol code, a transmission control protocol flag, an IP packet length, a differentiated services code point, and a slice identifier.

A plurality of match items may be used, so that a plurality of match manners can be met to meet match requirements of different services.

In a possible manner, the path feature identifier is carried in a color extended community attribute of the control message.

In a possible manner, the address identifier is carried in a redirection extended community attribute of the control message.

According to a third aspect, a first device is provided, where there are a plurality of forwarding paths between the first device and a second device, and the first device includes: a receiving unit, configured to obtain a control message, where the control message includes a match condition and a path parameter, the path parameter includes an address identifier and a path feature identifier, the address identifier is an identifier of the second device, and the path parameter indicates one forwarding path in the plurality of forwarding paths, where the receiving unit is further configured to receive a first packet; a processing unit, configured to determine that a forwarding path of the first packet passes through the second device; and a sending unit, configured to send the first packet to the second device along the forwarding path when the first device determines that a feature of the first packet meets the match condition.

According to the device, when there are a plurality of forwarding paths between two devices in a network, a data packet may be forwarded on a determined forwarding path, but not on a default forwarding path with lowest costs. A forwarding path can be specified without complex configuration by including both the match condition and the path parameter in the control message. When there are a plurality of devices between the two devices, the plurality of devices do not need to be configured one by one, and therefore configuration complexity is reduced.

In a possible manner, the path feature identifier includes a performance identifier, where the performance identifier indicates that the forwarding path meets a performance requirement corresponding to the performance identifier.

In the manner in which the performance identifier is used, a performance requirement that needs to be met by a forwarding path of a data service may be further specified, and therefore complexity of a plurality of times of configuration is reduced.

In a possible manner, the path feature identifier includes a path identifier, and the path identifier includes a binding segment identifier or a multi-protocol label switching tunnel identifier.

In the manner in which the path identifier is used, the forwarding path of the data service may be clearly specified, which requires simple configuration.

In a possible manner, the control message is border gateway protocol flow specification information.

The control message uses border gateway protocol flow specification rules, and a mature application technology may be used, so that utilization of the solution of the present invention is higher.

In a possible manner, the match condition includes one or more of the following: a destination address prefix, a source address prefix, an Internet Protocol (IP) number, a port number, a destination port number, a source port number, an international packet control protocol type, an international packet control protocol code, a transmission control protocol flag, an IP packet length, a differentiated services code point, and a slice identifier.

A plurality of match items may be used, so that a plurality of match manners can be met to meet match requirements of different services.

In a possible manner, the path feature identifier is carried in a color extended community attribute of the control message.

In a possible manner, the address identifier is carried in a redirection extended community attribute of the control message.

According to a fourth aspect, a first device is provided, where there are a plurality of forwarding paths between the first device and a second device, and the first device includes: a communication interface, configured to obtain a control message, where the control message includes a match condition and a path parameter, the path parameter includes an address identifier and a path feature identifier, the address identifier is an identifier of the second device, and the path parameter indicates one forwarding path in the plurality of forwarding paths, where the communication interface is further configured to receive a first packet; and a processor, configured to determine that a forwarding path of the first packet passes through the second device. The communication interface is configured to send the first packet to the second device along the forwarding path when the first device determines that a feature of the first packet meets the match condition.

According to the device, when there are a plurality of forwarding paths between two devices in a network, a data packet may be forwarded on a determined forwarding path, but not on a default forwarding path with lowest costs. A forwarding path can be specified without complex configuration by including both the match condition and the path parameter in the control message. When there are a plurality of devices between the two devices, the plurality of devices do not need to be configured one by one, and therefore configuration complexity is reduced.

In a possible manner, the path feature identifier includes a performance identifier, where the performance identifier indicates that the forwarding path meets a performance requirement corresponding to the performance identifier.

In the manner in which the performance identifier is used, a performance requirement that needs to be met by a forwarding path of a data service may be further specified, and therefore complexity of a plurality of times of configuration is reduced.

In a possible manner, the path feature identifier includes a path identifier, and the path identifier includes a binding segment identifier or a multi-protocol label switching tunnel identifier.

In the manner in which the path identifier is used, the forwarding path of the data service may be clearly specified, which requires simple configuration.

In a possible manner, the control message is border gateway protocol flow specification information.

The control message uses border gateway protocol flow specification rules, and a mature application technology may be used, so that utilization of the solution of the present invention is higher.

In a possible manner, the match condition includes one or more of the following: a destination address prefix, a source address prefix, an Internet Protocol (IP) number, a port number, a destination port number, a source port number, an international packet control protocol type, an international packet control protocol code, a transmission control protocol flag, an IP packet length, a differentiated services code point, and a slice identifier.

A plurality of match items may be used, so that a plurality of match manners can be met to meet match requirements of different services.

In a possible manner, the path feature identifier is carried in a color extended community attribute of the control message.

In a possible manner, the address identifier is carried in a redirection extended community attribute of the control message.

According to a fifth aspect, a management device is provided, and includes a sending unit, configured to: send a control message to a first device in a scenario in which there are a plurality of forwarding paths between the first device and a second device, where the control message includes a match condition and a path parameter, the path parameter includes an address identifier and a path feature identifier, the address identifier is an identifier of the second device, and the path parameter indicates one forwarding path in the plurality of forwarding paths; and when the control message indicates that the first device has received a packet whose forwarding path passes through the second device, and the packet meets the match condition, send a first packet to the second device along the forwarding path.

According to the device, when there are a plurality of forwarding paths between two devices in a network, a data packet may be forwarded on a determined forwarding path, but not on a default forwarding path with lowest costs. A forwarding path can be specified without complex configuration by including both the match condition and the path parameter in the control message. When there are a plurality of devices between the two devices, the plurality of devices do not need to be configured one by one, and therefore configuration complexity is reduced.

In a possible manner, the path feature identifier includes a performance identifier, where the performance identifier indicates that the forwarding path meets a performance requirement corresponding to the performance identifier.

In the manner in which the performance identifier is used, a performance requirement that needs to be met by a forwarding path of a data service may be further specified, and therefore complexity of a plurality of times of configuration is reduced.

In a possible manner, the path feature identifier includes a path identifier, and the path identifier includes a binding segment identifier or a multi-protocol label switching tunnel identifier.

In the manner in which the path identifier is used, the forwarding path of the data service may be clearly specified, which requires simple configuration.

In a possible manner, the control message is border gateway protocol flow specification information.

The control message uses border gateway protocol flow specification rules, and a mature application technology may be used, so that utilization of the solution of the present invention is higher.

In a possible manner, the match condition includes one or more of the following: a destination address prefix, a source address prefix, an Internet Protocol (IP) number, a port number, a destination port number, a source port number, an international packet control protocol type, an international packet control protocol code, a transmission control protocol flag, an IP packet length, a differentiated services code point, and a slice identifier.

A plurality of match items may be used, so that a plurality of match manners can be met to meet match requirements of different services.

In a possible manner, the path feature identifier is carried in a color extended community attribute of the control message.

In a possible manner, the address identifier is carried in a redirection extended community attribute of the control message.

According to a sixth aspect, a management device is provided, and includes a communication interface, configured to: send a control message to a first device in a scenario in which there are a plurality of forwarding paths between the first device and a second device, where the control message includes a match condition and a path parameter, the path parameter includes an address identifier and a path feature identifier, the address identifier is an identifier of the second device, and the path parameter indicates one forwarding path in the plurality of forwarding paths; and when the control message indicates that the first device has received a packet whose forwarding path passes through the second device, and the packet meets the match condition, send a first packet to the second device along the forwarding path.

According to the device, when there are a plurality of forwarding paths between two devices in a network, a data packet may be forwarded on a determined forwarding path, but not on a default forwarding path with lowest costs. A forwarding path can be specified without complex configuration by including both the match condition and the path parameter in the control message. When there are a plurality of devices between the two devices, the plurality of devices do not need to be configured one by one, and therefore configuration complexity is reduced.

In a possible manner, the path feature identifier includes a performance identifier, where the performance identifier indicates that the forwarding path meets a performance requirement corresponding to the performance identifier.

In the manner in which the performance identifier is used, a performance requirement that needs to be met by a forwarding path of a data service may be further specified, and therefore complexity of a plurality of times of configuration is reduced.

In a possible manner, the path feature identifier includes a path identifier, and the path identifier includes a binding segment identifier or a multi-protocol label switching tunnel identifier.

In the manner in which the path identifier is used, the forwarding path of the data service may be clearly specified, which requires simple configuration.

In a possible manner, the control message is border gateway protocol flow specification information.

The control message uses border gateway protocol flow specification rules, and a mature application technology may be used, so that utilization of the solution of the present invention is higher.

In a possible manner, the match condition includes one or more of the following: a destination address prefix, a source address prefix, an Internet Protocol (IP) number, a port number, a destination port number, a source port number, an international packet control protocol type, an international packet control protocol code, a transmission control protocol flag, an IP packet length, a differentiated services code point, and a slice identifier.

A plurality of match items may be used, so that a plurality of match manners can be met to meet match requirements of different services.

In a possible manner, the path feature identifier is carried in a color extended community attribute of the control message.

In a possible manner, the address identifier is carried in a redirection extended community attribute of the control message.

According to a seventh aspect, a network device is provided. The network device includes a main control board and an interface board, and may further include a switching board. The network device is configured to perform the method according to any one of the first aspect or the possible implementations of the first aspect. Specifically, the network device includes modules configured to perform the method according to any one of the first aspect or the possible implementations of the first aspect.

According to an eighth aspect, a network device is provided. The network device includes a main control board and an interface board, and may further include a switching board. The network device is configured to perform the method according to any one of the second aspect or the possible implementations of the second aspect. Specifically, the network device includes modules configured to perform the method according to any one of the second aspect or the possible implementations of the second aspect.

According to a ninth aspect, a network system is provided, where the network system includes a first device and a management device. The first device is the first device provided in any one of the optional manners of the third aspect or the fourth aspect. The management device is the management device provided in any one of the optional manners of the fifth aspect or the sixth aspect.

According to a tenth aspect, a computer-readable storage medium is provided. The storage medium stores at least one instruction. The instruction is loaded by a processor to perform the data packet processing method according to any one of the first aspect and the optional manners of the first aspect, or the data packet processing method according to any one of the second aspect and the optional manners of the second aspect.

According to an eleventh aspect, a computer program is provided. The computer program is used to perform the method according to any one of the first aspect or the optional manners of the first aspect.

According to a twelfth aspect, a computer program is provided. The computer program is used to perform the method according to any one of the second aspect or the optional manners of the second aspect.

### BRIEF DESCRIPTION OF DRAWINGS

To describe technical solutions of the present invention more clearly, the following briefly describes accompanying drawings used in the embodiments. It is clear that, the following accompanying drawings are merely accompanying drawings of some embodiments of the present invention, and a person of ordinary skill in the art may derive other technical solutions and accompanying drawings of the present invention from these accompanying drawings without creative efforts. These technical solutions and accompanying drawings shall also be considered as falling within the scope of the present invention.
FIG. 1 is a schematic diagram of an application scenario according to an embodiment of this application;
FIG. 2 is a schematic diagram of a network system according to an embodiment of this application;
FIG. 3 is a flowchart of a packet forwarding method according to an embodiment of this application;
FIG. 4 is a schematic diagram of a match condition and an identifier of a device that is passed through according to an embodiment of this application;
FIG. 5 is a schematic diagram of a match condition and a path parameter according to an embodiment of this application;
FIG. 6 is a schematic diagram of a path parameter TLV according to an embodiment of this application;
FIG. 7 is a schematic diagram of an address identifier TLV according to an embodiment of this application;
FIG. 8 is a schematic diagram of a path feature identifier TLV according to an embodiment of this application;
FIG. 9 is a schematic diagram of a color extended community attribute according to an embodiment of this application;
FIG. 10 is a schematic diagram of a correspondence between a path parameter and a path identifier according to an embodiment of this application;
FIG. 11 is a schematic diagram of a structure of a first device according to an embodiment of this application;
FIG. 12 is a schematic diagram of a structure of a management device according to an embodiment of this application;
FIG. 13 is a schematic diagram of a structure of a first device according to an embodiment of this application; and
FIG. 14 is a schematic diagram of a structure of a management device according to an embodiment of this application.

### DESCRIPTION OF EMBODIMENTS

In order to enable a person skilled in the art to better understand solutions of the present invention, the following further describes embodiments of the present invention in detail with reference to the accompanying drawings and implementations.

In this application, terms such as "first", "second" and "third" are used to distinguish between same items or similar items that have basically same purposes or functions. It should be understood that there is no logical or time-sequential dependency between "first", "second" and "third", and a quantity and an execution sequence are not limited.

Terms included in this application are explained below.

Segment routing (Segment Routing, SR) is a protocol designed to forward data packets on a network based on an idea of source routing. In an SR network, a forwarding path of a data packet is explicitly specified by inserting a group of ordered segment identifiers into the data packet from a head node in a network that supports SR. SR applied to a multi-protocol label switching (Multi-Protocol Label Switching, MPLS) data plane is referred to as segment routing MPLS (MPLS-SR or SR-MPLS). SR applied to an Internet Protocol version 6 (Internet Protocol Version 6, IPv6) data plane is referred to as segment routing IPv6 (SRv6).

A head node (Head Node) is a start node of an SR forwarding path and is responsible for encapsulating a segment identifier.

A segment identifier (Segment ID, SID) is an ID that describes a segment, for example, represents a node or a link. In MPLS-SR, the SID is represented by an MPLS label. In SRv6, the SID is represented by a 128-bit value.

A segment identifier list (Segment ID List) is a list that includes a group of segment identifiers. After receiving a data packet, a head node inserts one SID list into the data packet, to explicitly indicate a forwarding path.

Binding segment identifier (Binding SID, BSID): A BSID is bound to a SID list to indicate a forwarding path. When receiving a valid BSID, a head node in an SR network performs a BSID-related operation. In an IPv6 segment routing (IPv6 Segment Routing, SRv6) network, a defined BSID-related operation may be: inserting, based on different BSID functions, a new SRH header (End.B6.Insert) or a new outer IPv6 header (End.B6.Encaps) including an SRH.

Forwarding path: In an SR network, a forwarding path may be a forwarding path corresponding to a BSID. During actual forwarding, the BSID may correspond to one forwarding path, or may correspond to a plurality of forwarding paths. In an MPLS network, a forwarding path may correspond to one MPLS tunnel.

Border gateway protocol flow specification (Border Gateway Protocol Flow Specification, BGP Flowspec): BGP is used to advertise a matching rule of traffic filtering and actions taken after traffic matching. In this way, the traffic matching rule and a traffic behavior can be advertised to a network device, and the traffic matching rule and the traffic behavior can be applied to the network device.

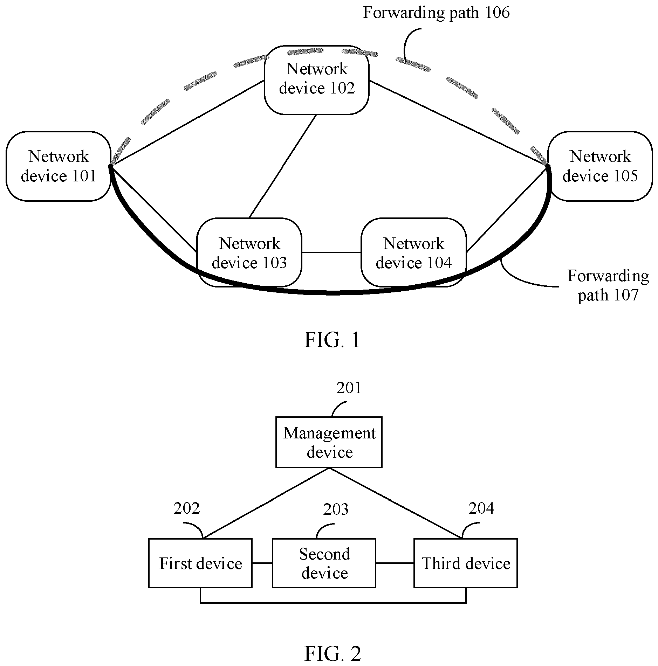

The following describes an application scenario of this application as an example. FIG. 1 is a schematic diagram of an application scenario according to an embodiment of this application. In the scenario shown in FIG. 1, a network device 101, a network device 102, a network device 103, a network device 104, and a network device 105 belong to a same network, and the network may be an MPLS network, or may be an SR network. The network device 101, the network device 102, the network device 103, the network device 104, and the network device 105 each may be a router device, or may be a switch or any other device with a routing function. A form of the device may be a physical apparatus device, or may be a virtualized device with a routing function. This is not specifically limited in this application.

A person skilled in the art may know that there may be more or fewer network devices in the application scenario. For example, there may be dozens of, hundreds of, or more network devices. A quantity of network devices and a device type are not limited in the embodiments of this application.

In the scenario shown in FIG. 1, the network device 101 is connected to the network device 102 and the network device 103, the network device 102 is connected to the network device 101, the network device 103, and the network device 105, the network device 103 is connected to the network device 101, the network device 102, and the network device 104, and the network device 105 is connected to the network device 102 and the network device 104. There are two forwarding paths between the network device 101 and the network device 105: a forwarding path 106 and a forwarding path 107. When the network is an MPLS network, the forwarding path 106 and the forwarding path 107 may be specifically two tunnels, and are represented by using different tunnel identifiers. When the network is an SR network, the forwarding path 106 and the forwarding path 107 may be represented by using two different binding segment identifiers. Assuming that the network is an MPLS network running an SR protocol, 10002, 10003, 10004, and 10005 may be used as segment identifiers of the network devices. For example, 10002 is a segment identifier of the network device 102, a network device 10003 is a segment identifier of the network device 103, 10004 is a segment identifier of the network device 104, and 10005 is a segment identifier of the network device 105. A binding segment identifier may be used to represent a forwarding path. For example, 10025 represents the forwarding path 106, and 10035 represents the forwarding path 107. A segment identifier list corresponding to 10025 is (10002, 10005), and the segment identifier list (10002, 10005) may be directly used to represent the forwarding path 106. A segment identifier list corresponding to 10035 may be (10003), (10003, 10005), or (10003, 10004, 10005), and the foregoing three segment identifier lists may be directly used to identify the forwarding path 107. When the network is an IPv6 network running the SR protocol, formats of the foregoing segment identifiers and the binding segment identifiers may also be identifiers conforming to an IPv6 format, or an IPv6 address is used as a corresponding segment identifier.

Optionally, the application scenario may further include a management device. The management device includes a controller, a management system, or a path computation element. The controller, the management system, and the path computation element may be connected to each network device by using a wireless network or a wired network. The controller, the management system, and the path computation element may be configured to set corresponding forwarding paths for different data packets. The controller, the management system, and the path computation element may be at least one of a server, a plurality of servers, a cloud computing platform, and a virtualization center. When there are a plurality of controllers, there may be at least two controllers configured to provide different services, and/or there may be at least two controllers configured to provide a same service. For example, a same service is provided in a load balancing manner. This is not limited in this embodiment.

FIG. 2 is a schematic diagram of a network system according to an embodiment of this application. The network system mainly includes a management device 201, a first device 202, a second device 203, and a third device 204. The management device 201 may be a controller, a path computation element, or a network management system. There are at least two forwarding paths between the first device 202 and the third device 204. One forwarding path is the first device 202 -> the second device 203 -> the third device 204, and the other forwarding path is the first device 202 -> the third device 204. The first device 202 may be the network device 101 or the network device 102 shown in FIG. 1, the third device 204 may be the network device 105 shown in FIG. 1, and the second device 203 may be the network device 103 and the network device 104.

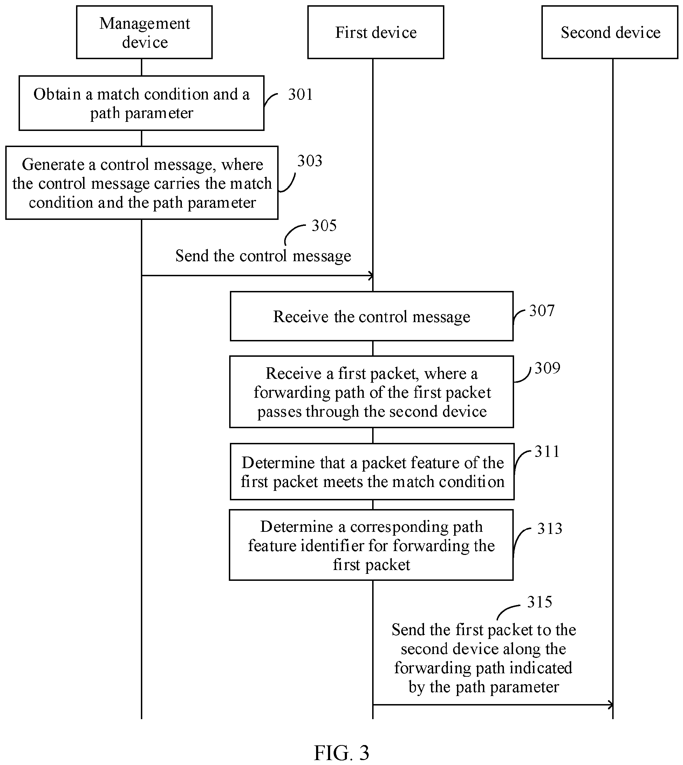

FIG. 3 is a flowchart of a packet forwarding method according to an embodiment of this application. As shown in FIG. 3, interaction of the method mainly includes a management device, a first device, and a second device. The first device may be a head node of a forwarding path of a data packet in a segment routing network, and the second device may be an egress node of the forwarding path. The method is applied to the application scenario shown in FIG. 1, the network device 101 and the network device 105 may be the first device and the second device respectively.

The following describes steps and optional manners mainly included in the method with reference to FIG. 1 and FIG. 3. For ease of understanding, an example in which the network device 101 is used as the first device and the network device 105 is used as the second device is used to describe the method embodiment. It should be understood that, this is merely an example. A person skilled in the art may also refer to this embodiment to perform a similar replacement and application. Examples are not provided one by one in this application.

The method includes the following steps.

S301. The management device obtains a match condition and a path parameter.

The path parameter includes an address identifier and a path feature identifier, the address identifier is an identifier of the network device 105, and the path parameter indicates one forwarding path in a plurality of forwarding paths between the network device 101 to the network device 105.

O&M personnel may directly configure the match condition and the path parameter on a user interface of the management device, or the management device may obtain, by using an upper-layer service system or application, a match condition of at least one service data flow and an identifier of a device that the service data flow needs to pass through. After obtaining the information, the management device obtains the match condition and the corresponding path parameter based on information such as a topology of a network in which the management device is located.

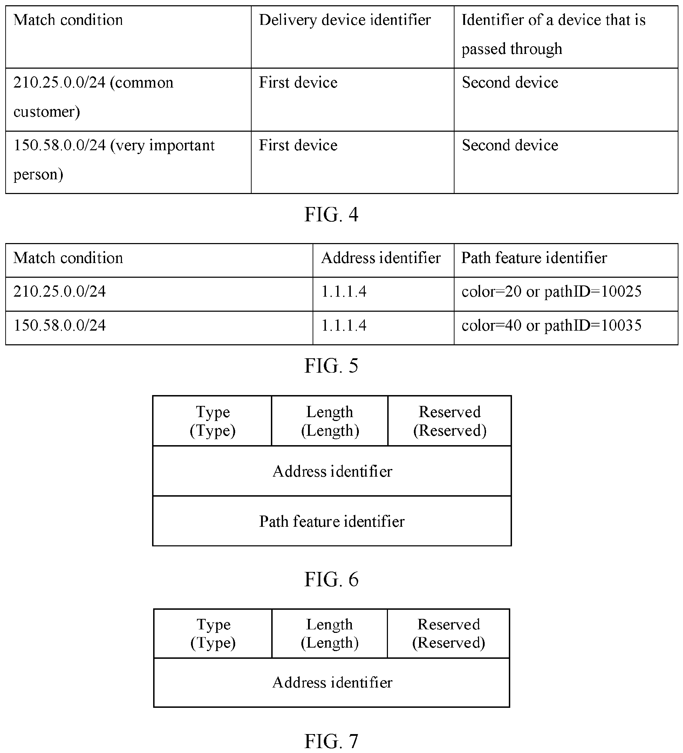

When the management device receives the match condition and the identifier of the device needing to be passed through that are sent by the upper-layer service system or application, the information such as the match condition and the identifier of the device needing to be passed through received by the management device may be shown in FIG. 4. In the example shown in FIG. 4, the management device obtains two pieces of information in total. The first piece of information includes: a data packet meeting a match condition that a destination address prefix is 210.25.0.0/24, a device that needs to execute this policy is the first device, and the identifier of the device that needs to be passed through is the second device. This piece of information indicates that when the network device 101 receives the data packet whose destination address prefix is 210.25.0.0/24, and a forwarding path of the packet passes through the network device 105, the forwarding path is specified for the data packet. For example, the forwarding path may be a forwarding path that meets a common customer service classification. The second piece of information includes: a data packet meeting a match condition that a destination address prefix is 150.58.0.0/24, a device that needs to execute this policy is the first device, and the identifier of the device that needs to be passed through is the second device. This piece of information indicates that when the network device 101 receives the data packet whose destination address prefix is 150.58.0.0/24, and a forwarding path of the packet passes through the network device 105, the forwarding path is specified for the data packet. For example, the forwarding path may be a forwarding path that meets a very important person (very important person, VIP) service classification.

After receiving the foregoing information, the management device obtains the corresponding match condition and path parameter.

The match condition may include one or more of the following:
a destination address prefix, a source address prefix, an Internet Protocol (IP) number, a port number, a destination port number, a source port number, an international packet control protocol type, an international packet control protocol code, a transmission control protocol flag, an IP packet length, a differentiated services code point, and a slice identifier.

The path parameter includes the address identifier and the path feature identifier. The address identifier may be an IP address of the network device that is passed through, for example, an IP address of the network device 105 is 1.1.1.4, or may be a segment identifier of the network device that is passed through, for example, 10005. The path feature identifier includes a performance identifier or a path identifier. The performance identifier may be used to indicate that the specified forwarding path meets network performance required by the performance identifier, that is, meets a performance requirement indicated by the performance identifier. The path identifier may be directly used to indicate the forwarding path, for example, 10035.

In conclusion, for the information obtained in FIG. 4, the match condition and the path parameter that are obtained by the management device are shown in FIG. 5, where color is used to represent the performance identifier, and pathID is a path ID and represents the path feature identifier.

S303. The management device generates a control message, where the control message carries the match condition and the path parameter.

The control message may be a path computation element communication protocol (Path Computation Element Communication Protocol, PCEP) control message, or may be a BGP Flowspec control message. The control message indicates the network device that receives the control message to forward, when the network device receives a data packet that meets the match condition, the data packet along the forwarding path indicated by the path parameter.

The address identifier and the path feature identifier included in the path parameter in the control message may be carried in a same extended community attribute, or may be carried in different extended community attributes.

The match condition and the path parameter are carried in network layer reachability information (network layer reachability information, NLRI) of a BGP update message, and the address identifier and the path feature identifier included in the path parameter are carried in a same type length value (type length value, TLV). In an example, the TLV is shown in FIG. 6. A type field in the TLV indicates that the TLV is a TLV carrying the path parameter, and a value of the TLV may be a type value specifically applied for the path parameter, for example, 90. A length field indicates an overall length of the TLV, which is a quantity of occupied bits. A reserved field facilitates subsequent extension. A value of an address identifier field indicates a device that is passed through, for example, 1.1.1.4. A value of a path feature identifier field may be a value such as 20 or 10025.

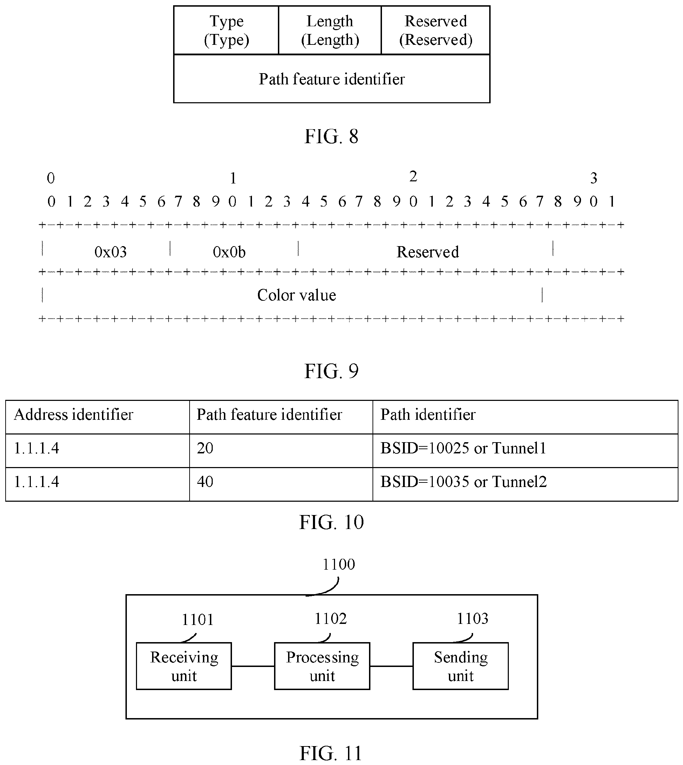

In another example, the address identifier and the path feature identifier included in the path parameter may be carried in different TLVs of the control message. A TLV of the address identifier may be shown in FIG. 7. A type field in the TLV indicates that the TLV is a TLV carrying the address identifier, and a value of the TLV may be a type value specifically applied for the address identifier, for example, 91. A length field indicates an overall length of the TLV, which is a quantity of occupied bits. A reserved field facilitates subsequent extension. A value of an address identifier field indicates a device that is passed through, for example, 1.1.1.4. A TLV of the path feature identifier may be shown in FIG. 8. A type field in the TLV indicates that the TLV is a TLV carrying the path feature identifier, and a value of the TLV may be a type value specifically applied for the path feature identifier, for example, 92. A length field indicates an overall length of the TLV, which is a quantity of occupied bits. A reserved field facilitates subsequent extension. A value of a path feature identifier field may be 20 or 10025.

In an example, when a value of the path feature identifier may be carried in a color community extended attribute of the control message, the color community extended attribute is shown in FIG. 9. 0x03 indicates that an extended community attribute is the color extended community attribute. 0x0b indicates that the extended community attribute occupies one byte (byte). A reserved field including eight bits 0 in total is reserved for use, and a color value field carries a specific value of the path feature identifier, for example, 20.

S305. The management device sends the generated control message to the first device.

The management device may send the control message to the first device by using the BGP, or may send the control message to the first device by using the PCEP.

S307. The first device receives the control message.

When the management device is a path computation element (path computation element, PCE) device, the first device may receive the control message by using the PCEP.

When the management device is a controller or another network device, the first device may receive the control message by using the BGP Flowspec protocol.

When the management device is a device such as a network management system, the first device may receive the control message by using a management protocol.

After receiving the control message, the first device may store the control message in the first device for future use. The control message may be valid for a long time, or may become effective in a specified time period.

S309. The first device receives a first packet, where a forwarding path of the first packet passes through the second device.

A method for determining, by the first device, that the forwarding path of the first packet passes through the second device includes but is not limited to the following three manners: 1. After receiving the first packet, the first device calculates, based on a destination IP address of the first packet, that a next-hop address for forwarding the first packet is an IP address of the second device. 2. After receiving the first packet, the first device calculates, based on a destination IP address of the first packet, that a next-hop address for forwarding the first packet is a segment identifier of the second device. 3. A destination IP address of the first packet is an IP address of the second device.

A sequence of performing steps S309 and S301 to S307 is not limited in this application. That is, the first device may first receive control information, or may first receive the first packet, and then request the control message from the management device.

S311. The first device determines that a feature of the first packet meets the match condition.

The feature of the first packet includes a packet header feature of the first packet, such as a destination address, a source address, an IP protocol, a source port number, a destination port number, an international packet control protocol type, an international packet control protocol code, a transmission control protocol flag, an IP packet length, a differentiated services code point, and a slice identifier.

That the first device determines that the feature of the first packet meets the match condition is specifically: The first device compares the feature of the first packet with content of the match condition, to determine that the feature of the first packet meets the match condition. In an example, the match condition includes a destination address prefix: 150.0.0.0/24. When the destination IP address of the first packet is 150.0.0.3, the first device determines that the feature of the first packet meets the match condition.

S313. The first device determines a corresponding path feature identifier for forwarding the first packet.

In the foregoing example, the destination IP address of the first packet is 150.0.0.3, and the first device calculates, based on the destination IP address of the first packet, that the next-hop address for forwarding the first packet is 1.1.1.4. In addition, the destination IP address of the first packet meets a match condition that the destination address prefix is 150.0.0.0/24. Then the first device determines that the corresponding path feature identifier for forwarding the first packet is color=40, or pathID=10035.

S315. The first device sends the first packet to the second device along the forwarding path indicated by the path parameter.

After determining the path feature identifier for forwarding the first packet, the first device sends the first packet to the second device along the forwarding path indicated by the path feature identifier.

When the path feature identifier is the path identifier, for example, pathID, the first device directly forwards the first packet along a forwarding path corresponding to pathID.

When the path feature identifier is a color identifier, for example, color, after determining a corresponding path identifier based on a correspondence between the address identifier, the path feature identifier and the path identifier, the first device forwards the first packet along a forwarding path corresponding to the path identifier. In an example, the correspondence between the address identifier, the path feature identifier and the path identifier is shown in FIG. 10. A column of address identifier indicates a next-hop address identifier for forwarding by the first device. The path feature identifier is the color identifier herein, and a value of the path feature identifier is 20 or 40. When the value of the path feature identifier is 20, a corresponding path identifier is BSID=10025, or a value of the path identifier corresponding to the MPLS network may be a tunnel (tunnel) ID, for example, tunnel1. When the value of the path feature identifier is 40, a corresponding path identifier is BSID=10035, or a value of the path identifier corresponding to the MPLS network may be a tunnel (tunnel) ID, for example, tunnel2. The first device forwards the first packet along the forwarding path corresponding to the path identifier.

The foregoing describes the embodiments of the packet forwarding method provided in this application, and the following describes the management device and the first device provided in this application.

FIG. 11 is a schematic diagram of a structure of a first device according to an embodiment of this application. A network device 1100 may perform the method performed by the first device (the network device 101) shown in FIG. 3. The network device 1100 includes a receiving unit 1101, a processing unit 1102, and a sending unit 1103. The receiving unit 1101 may be configured to perform, for example, a related method for receiving the control message and the first packet in steps S307 and S309 in the embodiment of FIG. 3. The processing unit 1102 may be configured to perform, for example, a related method for determining that the feature of the first packet meets the match condition and determining that the corresponding path feature identifier for forwarding the first packet in steps S311 and S313 in the embodiment of FIG. 3. The sending unit 1103 may be configured to perform, for example, step S315 in the embodiment of FIG. 3.

It should be noted that, when the first device provided in the embodiment of FIG. 11 performs the foregoing packet forwarding, division into the foregoing function units is merely used as an example for description. During actual application, the foregoing functions may be allocated to different function units for implementation based on a requirement. In other words, an internal structure of the first device is divided into different function units, to implement all or some of the functions described above. Alternatively, a unified function unit is used to complete the functions of a plurality of units. It should be understood that, the first device provided in the foregoing embodiment and the foregoing embodiments of the packet forwarding method belong to a same concept. The steps performed by the units of the first device are merely used as examples for description, and this does not mean that the units of the first device do not perform other steps or optional methods in the foregoing embodiments. For a specific implementation process, refer to the method embodiments, and details are not described herein again.

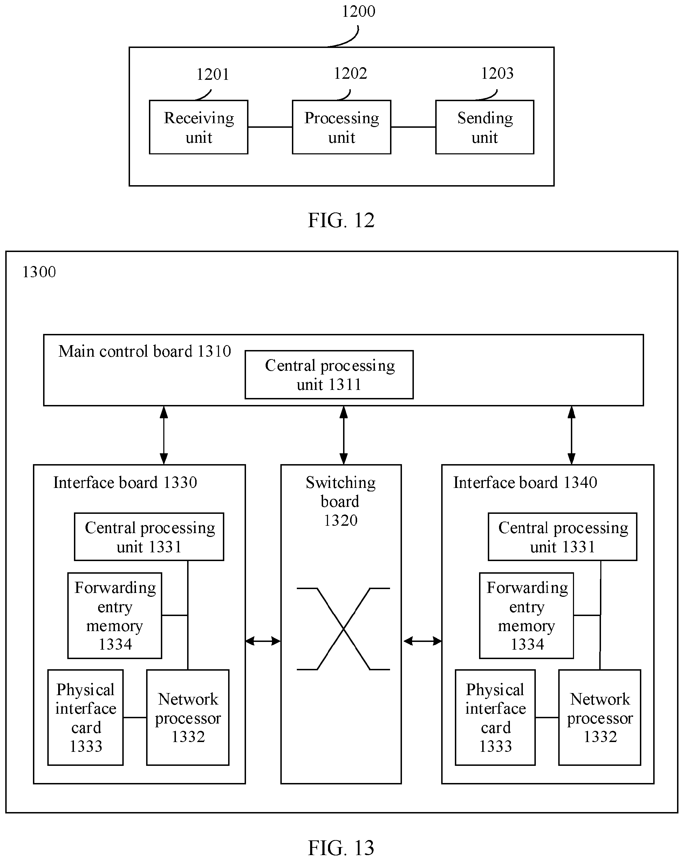

FIG. 12 is a schematic diagram of a structure of a management device according to an embodiment of this application. A management device 1200 may perform the method performed by the management device shown in FIG. 3. The network device 1200 includes a receiving unit 1201, a processing unit 1202, and a sending unit 1203. The receiving unit 1201 may be configured to perform, for example, a related method for obtaining the match condition and the path parameter in step S301 in the embodiment of FIG. 3. The processing unit 1202 may be configured to perform, for example, a method for generating the control message in step S303 in the embodiment of FIG. 3. The sending unit 1203 may be configured to perform, for example, step S305 in the embodiment of FIG. 3.

It should be noted that, when the management device provided in the embodiment of FIG. 12 performs the foregoing packet forwarding method, division into the foregoing function units is merely used as an example for description. During actual application, the foregoing functions may be allocated to different function units for implementation based on a requirement. In other words, an internal structure of the management device is divided into different function units, to implement all or some of the functions described above. Alternatively, a unified function unit is used to complete the functions of a plurality of units. It should be understood that, the management device provided in the foregoing embodiment and the foregoing embodiments of the packet forwarding method belong to a same concept. The steps performed by the units of the management device are merely used as examples for description, and this does not mean that the units of the management device do not perform other steps or optional methods in the foregoing embodiments. For a specific implementation process, refer to the method embodiments, and details are not described herein again.

The foregoing describes the first device and the management device in the embodiments of this application, and the following describes possible product forms of a first network device and the management device. It should be understood that any form of product that has a feature of the first device in FIG. 11 and any form of product that has a feature of the management device in FIG. 12 fall within the protection scope of this application. It should be further understood that the following descriptions are merely examples, and the product forms of the first device and the management device in the embodiments of this application are not limited.

FIG. 13 is a schematic diagram of a structure of a first device 1300 according to an embodiment of this application. Refer to the schematic diagram of the structure of the device shown in FIG. 13. The device 1300 includes a main control board and one or more interface boards, where the main control board is communicatively connected to the interface boards. The main control board is also referred to as a main processing unit (main processing unit, MPU) or a route processor card (route processor card). The main control board is responsible for controlling and managing each component in the device 1300, including route computation, device management, and function maintenance. The interface board is also referred to as a line processing unit (line processing unit, LPU) or a line card (line card), and is configured to forward data. In some embodiments, the device 1300 may also include a switching board. The switching board is communicatively connected to the main control board and the interface board. The switching board is configured to forward data between the interface boards. The switching board may also be referred to as a switch fabric unit (switch fabric unit, SFU). The interface board includes a central processing unit, a memory, a forwarding chip, and a physical interface card (physical interface card, PIC). The central processing unit is communicatively connected to the memory, a network processor, and the physical interface card. The memory is configured to store a forwarding information table. The forwarding chip is configured to forward a received data packet based on the forwarding information table stored in the memory. If a destination address of the data packet is an address of the device 1300, the data packet is sent to the central processing unit (central processing unit, CPU), for example, a central processing unit 1331, for processing. If the destination address of the data packet is not the address of the device 1300, a next hop and an outbound interface that correspond to the destination address are found in the forwarding information table based on the destination address, and the data packet is forwarded to the outbound interface corresponding to the destination address. The forwarding chip may be a network processor (network processor, NP). The PIC, also referred to as a subcard, can be installed on the interface board. The PIC is responsible for converting an optical or electrical signal to a data packet, checking validity of the data packet, and forwarding the data packet to the forwarding chip for processing. In some embodiments, the central processing unit may also perform a function of the forwarding chip, for example, implement software forwarding based on a general-purpose CPU, so that the interface board does not need the forwarding chip. A communication connection between the main control board, the interface board, and the switching board may be implemented by using a bus. In some embodiments, the forwarding chip may be implemented as an application-specific integrated circuit (application-specific integrated circuit, ASIC) or a field programmable gate array (field programmable gate array, FPGA).

Logically, the device 1300 includes a control plane and a forwarding plane. The control plane includes the main control board and the central processing unit. The forwarding plane includes components for performing forwarding, such as the memory, the PIC, and the NP. The control plane performs functions such as a function of a router, generating the forwarding information table, processing signaling and protocol packets, and configuring and maintaining a status of a device. The control plane delivers the generated forwarding information table to the forwarding plane. On the forwarding plane, the NP forwards, based on the forwarding information table delivered by the control plane, the packet table received by the PIC of the device 1300. The forwarding information table delivered by the control plane may be stored in the memory. In some embodiments, the control plane and the forwarding plane may be totally separated, and are not on a same device. The following briefly describes the foregoing process with reference to the embodiments of FIG. 3a and FIG. 4a.

As shown in the method in FIG. 3, the first device in the network may receive the control message and the first packet by using a physical interface card 1333, and the central processing unit 1331 determines that when the packet feature of the first packet meets the first packet, and when the determined next hop address based on the destination IP address of the first packet is the address of the second device, the data packet is sent to the physical interface card 1333 on a corresponding forwarding path. The physical interface card 1333 may be configured to send the first packet to the second device.

The first device provided in this embodiment of the present invention may correspond to the first device and the second device or the management device in the foregoing method embodiment in FIG. 3, and may implement functions of the first device and the management device in the foregoing method embodiments and/or various steps and methods. The foregoing is merely a brief example description. For brevity, details are not described herein again.

It should be noted that, there may be one or more main control boards. When there are a plurality of main control boards, the main control boards may include an active main board and a standby main board. There may be one or more interface boards. The network device having a stronger data processing capability provides more interface boards. There may also be one or more physical interface cards on the interface board. There may be no switching board, or there may be one or more switching boards. When there are a plurality of switching boards, load sharing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is greater than that of a device in the centralized architecture. Optionally, the network device may alternatively be in a form in which there is only one card. To be specific, there is no switching board, and functions of the interface board and the main control board are integrated on the card. In this case, a central processing unit on the interface board and a central processing unit on the main control board may be combined to form one central processing unit on the card, to perform functions obtained after the two central processing units are combined. This form of device (for example, a network device such as a low-end switch or a router) has a weak data exchange and processing capability. A specific architecture that is to be used depends on a specific networking deployment scenario. This is not limited herein.

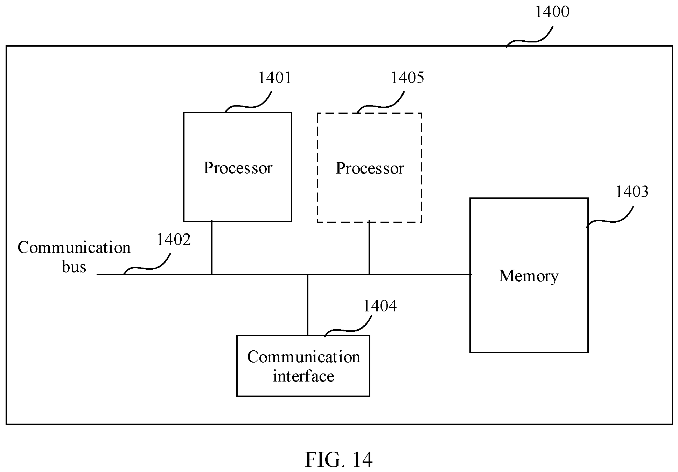

FIG. 14 is a schematic diagram of a structure of a management device 1400 according to an embodiment of this application. Either the management device or the first device shown in the embodiment of FIG. 3 may be implemented by the device shown in FIG. 14. Refer to the schematic diagram of the structure of the device shown in FIG. 14. The device 1400 includes at least one processor 1401, a communication bus 1402, and at least one communication interface 1404. Optionally, the device 1400 may further include a memory 1403.

The processor 1401 may be a general-purpose central processing unit (central processing unit, CPU), an application-specific integrated circuit (application-specific integrated circuit, ASIC), or one or more integrated circuits configured to control program execution of the solutions in this application. The processor may be configured to process a received packet, to implement the packet processing method provided in the embodiments of this application.

For example, when the management device in FIG. 3 is implemented by the device 1400 shown in FIG. 14, the processor may be configured to generate a control message based on an obtained match condition and an obtained path parameter. For specific function implementation, refer to the processing part corresponding to the management device in the method embodiment of FIG. 3.

The communication bus 1402 is configured for information transmission between the processor 1401, the communication interface 1404, and the memory 1403.

The memory 1403 may be a read-only memory (read-only memory, ROM), for example, an electrically erasable programmable read-only memory (electrically erasable programmable read-only memory, EEPROM), a compact disc read-only memory (compact disc read-only memory, CD-ROM), or another compact disc or optical disc storage (including a compressed optical disc, a laser disc, an optical disc, a digital versatile disc, a Blu-ray disc, or the like). Alternatively, the memory 1403 may be a random access memory (random access memory, RAM) or another type of dynamic storage device that can store information and instructions.

The memory 1403 may exist independently, and is connected to the processor 1401 by using the communication bus 1402. Alternatively, the memory 1403 may be integrated with the processor 1401.

Optionally, the memory 1403 is configured to store program code or instructions for executing the solutions of this application, and the processor 1401 controls the execution. The processor 1401 is configured to execute the program code stored in the memory 1403. The program code may include one or more software modules. Optionally, the processor 1401 may alternatively store program code or instructions for executing the solutions of this application.

The communication interface 1404 is any apparatus such as a transceiver, and is configured to communicate with another device or a communication network. The communication network may be the Ethernet, a radio access network (RAN), a wireless local area network (wireless local area network, WLAN), or the like. In this embodiment of this application, the communication interface 1404 may be configured to receive a packet sent by another device in a network, or may send the packet to another network device in the network. The communication interface 1404 may be an Ethernet (Ethernet) interface, a Fast Ethernet (Fast Ethernet, FE) interface, or a Gigabit Ethernet (Gigabit Ethernet, GE) interface.

During specific implementation, in an embodiment, the device 1400 may include a plurality of processors, for example, the processor 1401 and a processor 1405 shown in FIG. 14. Each of the processors may be a single-core (single-CPU) processor or a multi-core (multi-CPU) processor. The processor herein may be one or more devices, circuits, and/or processing cores configured to process data (for example, computer program instructions).

It should be understood that the foregoing product forms of the network devices have any function of the network devices in the foregoing data packet processing method embodiments, and details are not described herein.

A person of ordinary skill in the art may be aware that, the method steps and units that are described with reference to the embodiments disclosed in this specification can be implemented by electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person of ordinary skill in the art that, for a purpose of convenient and brief descriptions, for a detailed working process of the foregoing system, apparatus and unit, refer to a corresponding process in the foregoing method embodiments. Details are not described herein again.

In the several embodiments provided in this application, it should be understood that the disclosed apparatus and method may be implemented in another manner. For example, the described apparatus embodiment is merely an example. For example, division into units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical form or another form.

Units described as separate components may or may not be physically separated, and components displayed as the units may or may not be physical units. That is, the units may be located at one location, or may be distributed to a plurality of network units. Some or all of the units may be selected based on an actual requirement to implement the objectives of the solutions in the embodiments of this application.

In addition, the processing units in the embodiments of this application may be dispersed in a plurality of function units, or may be integrated into one processing unit. Each of the units may exist alone physically, or two or more units may be integrated into one unit. The integrated unit may be implemented in a form of hardware, or may be implemented in a form of a software function unit.

All or some of the foregoing embodiments may be implemented by using software, hardware, firmware, or any combination thereof. When the software, the firmware or the combination of the software and the hardware is used to implement the embodiments, all or some of the embodiments may be implemented in a form of a computer program product. The computer program product includes one or more computer program instructions. When the computer program instructions are loaded and executed on a computer, the procedures or the functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer program instructions may be transmitted from a website, a computer, a server, or a data center to another website, computer, server, or data center in a wired or wireless manner. The computer-readable storage medium may be any medium accessible by a computer, or a data storage device, for example, a server or a data center, integrating one or more media. The medium may be a magnetic medium (for example, a floppy disk, a hard disk, or a magnetic tape), an optical medium (for example, an optical disc), a semiconductor medium (for example, a solid-state drive), or the like.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A packet forwarding method, comprising:
obtaining, by a first device, a control message in a scenario in which there are a plurality of forwarding paths between the first device and a second device, wherein the control message comprises a match condition and a path parameter, the path parameter comprises an address identifier and a path feature identifier, the address identifier is an identifier of the second device, and the path parameter indicates one forwarding path in the plurality of forwarding paths;
receiving, by the first device, a first packet;
determining, by the first device, that a forwarding path of the first packet passes through the second device; and
sending, by the first device, the first packet to the second device along the forwarding path when the first device determines that a feature of the first packet meets the match condition.

2. The method according to claim 1, wherein the path feature identifier comprises a performance identifier, and the performance identifier indicates that the forwarding path meets a performance requirement corresponding to the performance identifier.

3. The method according to claim 1 or 2, wherein the path feature identifier comprises a path identifier, and the path identifier comprises a binding segment identifier or a multi-protocol label switching tunnel identifier.

4. The method according to any one of claims 1 to 3, wherein the control message is border gateway protocol flow specification information.

5. The method according to any one of claims 1 to 4, wherein the match condition comprises one or more of the following:
a destination address prefix, a source address prefix, an Internet Protocol IP number, a port number, a destination port number, a source port number, an international packet control protocol type, an international packet control protocol code, a transmission control protocol flag, an IP packet length, a differentiated services code point, and a slice identifier.

6. The method according to any one of claims 1 to 5, wherein the path feature identifier is carried in a color extended community attribute of the control message.

7. The method according to any one of claims 1 to 6, wherein the address identifier is carried in a redirection extended community attribute of the control message.

8. A packet forwarding method, comprising:
sending, by a management device, a control message to a first device in a scenario in which there are a plurality of forwarding paths between the first device and a second device, wherein the control message comprises a match condition and a path parameter, the path parameter comprises an address identifier and a path feature identifier, the address identifier is an identifier of the second device, and the path parameter indicates one forwarding path in the plurality of forwarding paths; and
when the control message indicates that the first device has received a packet whose forwarding path passes through the second device, and the packet meets the match condition, sending the packet to the second device along the forwarding path.

9. The method according to claim 8, wherein the path feature identifier comprises a performance identifier, and the performance identifier indicates that the forwarding path meets a performance requirement corresponding to the performance identifier.

10. The method according to claim 8 or 9, wherein the path feature identifier comprises a path identifier, and the path identifier comprises a binding segment identifier or a multi-protocol label switching tunnel identifier.

11. The method according to any one of claims 8 to 10, wherein the control message is border gateway protocol flow specification information.

12. The method according to any one of claims 8 to 11, wherein the match condition comprises one or more of the following:
a destination address prefix, a source address prefix, an Internet Protocol IP number, a port number, a destination port number, a source port number, an international packet control protocol type, an international packet control protocol code, a transmission control protocol flag, an IP packet length, a differentiated services code point, and a slice identifier.

13. The method according to any one of claims 8 to 12, wherein the path feature identifier is carried in a color extended community attribute of the control message.

14. The method according to any one of claims 8 to 13, wherein the address identifier is carried in a redirection extended community attribute of the control message.

15. A first device, wherein there are a plurality of forwarding paths between the first device and a second device, and the first device comprises:
a receiving unit, configured to obtain a control message, wherein the control message comprises a match condition and a path parameter, the path parameter comprises an address identifier and a path feature identifier, the address identifier is an identifier of the second device, and the path parameter indicates one forwarding path in the plurality of forwarding paths, wherein
the receiving unit is further configured to receive a first packet;
a processing unit, configured to determine that a forwarding path of the first packet passes through the second device; and
a sending unit, configured to send the first packet to the second device along the forwarding path when the first device determines that a feature of the first packet meets the match condition.

16. The first device according to claim 15, wherein the path feature identifier comprises a performance identifier, and the performance identifier indicates that the forwarding path meets a performance requirement corresponding to the performance identifier.

17. The first device according to claim 15 or 16, wherein the path feature identifier comprises a path identifier, and the path identifier comprises a binding segment identifier or a multi-protocol label switching tunnel identifier.

18. The first device according to any one of claims 15 to 17, wherein the control message is border gateway protocol flow specification information.

19. A management device, comprising:
a sending unit, configured to send a control message to a first device in a scenario in which there are a plurality of forwarding paths between the first device and a second device, wherein the control message comprises a match condition and a path parameter, the path parameter comprises an address identifier and a path feature identifier, the address identifier is an identifier of the second device, and the path parameter indicates one forwarding path in the plurality of forwarding paths; and
when the control message indicates that the first device has received a packet whose forwarding path passes through the second device, and the packet meets the match condition, send the packet to the second device along the forwarding path.

20. The management device according to claim 19, wherein the path feature identifier comprises a performance identifier, and the performance identifier indicates that the forwarding path meets a performance requirement corresponding to the performance identifier.

21. The management device according to claim 19 or 20, wherein the path feature identifier comprises a path identifier, and the path identifier comprises a binding segment identifier or a multi-protocol label switching tunnel identifier.

22. The management device according to any one of claims 19 to 21, wherein the control message is border gateway protocol flow specification information.

23. A network system, wherein the network system comprises a management device and a first device, the first device is the first device according to any one of claims 15 to 18, and the management device is the management device according to any one of claims 19 to 22.

24. A computer-readable storage medium, wherein the storage medium stores a computer program, and the computer program is used to perform the method according to any one of claims 1 to 14.
